# EUROPÄISCHE PATENTSCHRIFT

(11) **EP 3 963 358 B1**
(45) Veröffentlichungstag und Bekanntmachung des Hinweises auf die Patenterteilung: **26.04.2023**
(21) Anmeldenummer: 20724044.1
(22) Anmeldetag: 30.04.2020
(51) Int. Cl.: G01S 7/481, G01S 17/87, G01S 17/894, G06F 3/03, G06F 3/01, G06F 3/042

(54) **ERFASSUNGSVORRICHTUNG MIT ZUMINDEST EINER SENSOREINRICHTUNG, EINER AUSWERTEEINRICHTUNG, EINER LICHTQUELLE SOWIE EINEM TRÄGERMEDIUM**
DETECTION DEVICE WITH AT LEAST ONE SENSOR DEVICE, AN ANALYSIS DEVICE, A LIGHT SOURCE, AND A CARRIER MEDIUM
SYSTÈME DE DÉTECTION COMPRENANT AU MOINS UN ENSEMBLE CAPTEUR, UN DISPOSITIF D'ÉVALUATION, UNE SOURCE LUMINEUSE ET UN ENSEMBLE SUPPORT

(30) Priorität: 03.05.2019 DE 102019206374
(43) Veröffentlichungstag der Anmeldung: 09.03.2022
(73) Patentinhaber: Audi AG, 85045 Ingolstadt (DE)
(72) Erfinder: KLUG, Markus, 85057 Ingolstadt (DE); MOLL, Tobias, 85055 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2020/062115
(87) Internationale Veröffentlichungsnummer: WO 2020/225125

(56) Entgegenhaltungen:
- DE-A1-102017 217 193
- US-A1- 2018 003 805

## Beschreibung

Die Erfindung betrifft eine Erfassungsvorrichtung mit zumindest einer Sensoreinrichtung, einer Auswerteeinrichtung, einer Lichtquelle sowie einem Trägermedium. Die Erfassungsvorrichtung ermöglich eine optische Erfassung eines Objekts in einer Umgebung und eine Abstandsbestimmung zu dem Objekt.

Zum Durchführen einer Berührungserkennung mittels eines Geräts sind verschiedene Methoden bekannt, beispielsweise das Erfassen einer Berührung mithilfe von kapazitiven Sensoroberflächen oder optischen Systemen, wie zum Beispiel einer Infrarotkamera oder einem herkömmlichen Kamerasystem, oder basierend auf Induktivität oder reflektiertem Laserlicht. Hinsichtlich der Erfassung von Gesten in einem vorgegebenen Raum kann beispielsweise auf eine Stereokamera oder einen Auswertealgorithmus, der auf Methoden des maschinellen Lernens basiert und dazu ausgelegt ist, beispielsweise von einer Videokamera bereitgestelltes Videomaterial zu interpretieren, zurückgegriffen werden.

In der US 9,826,216 B1 ist ein Musterprojektionssystem gezeigt, das eine kohärente Lichtquelle umfasst. Eine Optik dieses Systems weist ein holografisch optisches Element auf und ist dazu ausgelegt, Gesten zu erfassen, wofür von dem optischen Element ein Lichtmuster erzeugt und zum Abbilden auf einen Bildschirm projiziert wird.

Die DE 10 2006 000 777 B4 zeigt eine Zutrittssteuervorrichtung, um einem Fahrer oder Fahrgast einen Zugang zu einem Fahrzeug zu ermöglichen. Das Fahrzeug umfasst eine Abbildungsfläche, auf der mittels eines Abbildungsgenerators eine Tastaturabbildung erzeugt wird. Die Zutrittssteuervorrichtung umfasst außerdem eine Kamera, mit der eine Geste detektiert werden kann, die durch den Fahrer oder Fahrgast in der Nähe der Tastaturabbildung ausgeführt wird. Der Abbildungsgenerator kann hierbei ein durchsichtiges optisches Element oder sogar ein holografisches optisches Element umfassen. In der EP 1 429 112 A1 ist ein holografisches optisches Element für die Messung der Ausdehnung und Lage eines Objekt mithilfe eines abgelenkten, einen bestimmten Winkelbereich überstreichenden Laserstrahls beschrieben. Hierbei wird das holografische optische Element von mehreren Laserstrahlen durchstrahlt, mit denen mehrere Abmessungen eines dreidimensionalen Objekts gleichzeitig gemessen werden, und zwar basierend auf Differenzmustern der Laserstrahlen.

US2018003805 zeigt ein LiDAR mit holographischem Wellenleiter.

Aus dem Stand der Technik sind generell optische Beugungsgitter bekannt, die holographisch hergestellt werden und daher als holografische Gitter bezeichnet werden. Diesbezüglich ist aus der wissenschaftlichen Veröffentlichung "Volume-phase holographic gratings and their potential for astronomical applications" (S. C. Barden, J. A. Arns und W. S. Colburn, Proceedings SPIE 3355, Optical Astronomical Instrumentation, 1998) bekannt, dass Licht, das auf ein derartiges holografisches Gitter in einem Winkel trifft, der deutlich außerhalb des Winkelbereichs liegt, der die Bragg-Bedingung erfüllt, ungebeugt das holografische Gitter passiert. Trifft jedoch Licht aus einem Winkel auf das holografische Gitter, sodass die Bragg-Bedingung zumindest in etwa erfüllt ist, wird das Licht in einem Winkel gebeugt. Ein ähnliches Verhalten zeigt sich bezüglich einer Wellenlängenabhängigkeit des Einflusses des holografischen Gitters auf Licht. Denn Licht mit einer Wellenlänge, die deutlich außerhalb des Wellenlängenbereichs liegt, der durch die Bragg-Bedingung als sogenannte Bragg-Wellenlänge vorgegeben wird, passiert ebenfalls das holografische Gitter ohne gebeugt zu werden und lediglich Licht mit einer Wellenlänge, die die Bragg-Bedingung zumindest in etwa erfüllt, wird am holografischen Gitter gebeugt. Mittels komplexer holografischer Gitterstrukturen ist es somit beispielsweise möglich, dass Licht mit zwei verschiedenen Wellenlängenbereichen in jeweils demselben Winkel gebeugt wird. Außerdem kann durch ein holografisches Gitter beispielsweise Licht mit verschiedenen Wellenlängen in verschiedene Lichtwege aufgeteilt werden, sodass mithilfe eines holografischen Gitters ein dispersiver Strahlteiler realisiert werden kann.

Keine der oben beschriebenen Methoden zur Berührungs- und Gestenerfassung ist dazu ausgelegt, mithilfe eines großflächigen Mediums realisiert zu werden. Denn großflächig einsetzbare Berührungs- und Erkennungssystemen sind bisher entweder von ihrer Auflösung her eingeschränkt oder weisen eine geringe Reichweite auf, sodass sie nicht in einem Raum, beispielsweise von typischer Wohnraumgröße, nutzbar sind. Insbesondere Gestenerfassungssysteme sind entweder nicht flächig ausführbar oder benötigen einen großen Abstand zu einem zu untersuchenden Objekt, um eine große Fläche erfassungstechnisch abdecken zu können. Der Grund hierfür ist, dass üblicherweise punktförmige Sensoren zum Einsatz kommen und/oder mehrere punktuell ausgebildete Radarsensoren.

Es ist die Aufgabe der Erfindung, eine Lösung bereitzustellen, mittels der eine großflächige Erfassung oder Erkennung eines Objekts in einem Raumabschnitt möglich ist, wobei gleichzeitig präzise eine Relativlage des Objekts zu einem Bezugspunkt bestimmt werden kann.

Diese Aufgabe wird durch den Gegenstand des unabhängigen Patentanspruchs gelöst. Vorteilhafte Weiterbildungen der Erfindung sind durch die abhängigen Patentansprüche, die folgende Beschreibung sowie die Figuren offenbart.

Die erfindungsgemäße Erfassungsvorrichtung umfasst zumindest eine Sensoreinrichtung, eine Auswerteeinrichtung, eine Lichtquelle sowie ein flächiges Trägermedium. Das Trägermedium weist also eine größere Länge und Breite einer Oberfläche auf, als eine Dicke des Trägermediums senkrecht zu einer Oberflächenebene der Oberfläche. Das Trägermedium ist beispielsweise als Platte, zum Beispiel aus Kunststoff oder Glas, realisiert, wobei das Trägermedium Licht aus einer Umgebung an die zumindest eine Sensoreinrichtung weiterleitet. Das Trägermedium ist somit als Lichtleiter ausgebildet, das heißt das Trägermedium stellt ein Lichtleitmedium dar. Das heißt, das Trägermedium kann Licht, das in das Trägermedium eingekoppelt ist, mittels interner Reflexion, bevorzugt Totalreflexion, an die zumindest eine Sensoreinrichtung weiterleiten. Die Sensoreinrichtung wiederum kann das weitergeleitete Licht, das insbesondere aus dem Trägermedium ausgekoppelt ist, erfassen und daraus Sensordaten einer vorgegebenen Art erzeugen oder generieren.

Zum Einkoppeln und Auskoppeln des Lichts sind an dem Trägermedium ein Einkoppelbereich und ein Auskoppelbereich bereitgestellt. Das Trägermedium trägt somit den Einkoppelbereich und den Auskoppelbereich und dient als Medium für die Lichtleitung, weshalb es hier entsprechend benannt ist. Die Lichtquelle ist dazu ausgebildet, Licht auszusenden. Die Lichtquelle kann beispielsweise dazu ausgebildet sein, Licht im sichtbaren Wellenlängenbereich auszusenden.

Der Einkoppelbereich ist als holografisches Element mit einer ersten Ablenkstruktur ausgebildet. Eine Beschreibung einer Funktionsweise eines derartigen holografischen Elements, das bevorzugt als optisches Gitter, das mittels holografischer Methoden hergestellt wurde, bereitgestellt wird, findet sich in der oben zitierten wissenschaftlichen Publikation. Der Einkoppelbereich kann daher zum Beispiel als Beugungsgitter realisiert sein. Die erste Ablenkstruktur des Einkoppelbereichs ist dazu ausgebildet, Licht, das von der Lichtquelle ausgesendet und von einem Objekt in der Umgebung der Erfassungsvorrichtung reflektiert wird, in das Trägermedium einzukoppeln.

Das Trägermedium ist dazu ausgebildet, das eingekoppelte Licht mittels interner Reflexion von dem Einkoppelbereich an den Auskoppelbereich zu übertragen. Das Licht, das von dem Objekt in der Umgebung auf die erste Ablenkstruktur des Einkoppelbereichs fällt und in das Trägermedium eingekoppelt wird, wird also innerhalb des Trägermediums in zick-zack-artigen Bewegungen entlang einer Richtung parallel zu einer Ebene der Oberfläche des Trägermediums geleitet, wobei der Ausbreitungsweg durch die Totalreflexion zick-zack-förmig verläuft.

Der Auskoppelbereich ist ebenfalls als holografisches Element ausgebildet und weist eine zweite Ablenkstruktur auf. Die zweite Ablenkstruktur ist dazu ausgelegt, das übertragene, reflektierte Licht, das auf die zweite Ablenkstruktur des Auskoppelbereichs fällt, aus dem Trägermedium auszukoppeln. Insgesamt wird also von der Lichtquelle Licht zu dem Objekt in der Umgebung ausgesendet. Bei solche einem Objekt kann es sich es sich beispielsweise um einen Gegenstand, wie zum Beispiel einen Apfel oder die Fingerspitze eines Benuzters, handeln. Das Licht wird daraufhin an dem Objekt, das heißt zum Beispiel an dem Apfel oder der Fingerspitze, reflektiert, wobei das reflektierte Licht im Einkoppelbereich in die Erfassungsvorrichtung eingekoppelt wird, von dem Trägermedium weiter übertragen oder geführt und letztendlich im Auskoppelbereich wieder ausgekoppelt wird.

Die zumindest eine Sensoreinrichtung der Erfassungsvorrichtung ist nun dazu ausgebildet, das im Auskoppelbereich ausgekoppelte Licht zu erfassen und damit korrelierte Sensordaten bereitzustellen. Die Sensoreinrichtung ist hierbei als eine Time-of-Flight-Kameraeinrichtung ausgebildet. Eine Time-of-Flight-Kameraeinrichtung ist generell dazu ausgelegt, mittels eines Laufzeitverfahrens eine Distanz zu einem Objekt zu messen. Hierbei wird eine Umgebung der Time-of-Flight-Kameraeinrichtung mittels eines Lichtpulses, wie hier mithilfe des Lichts der Lichtquelle, ausgeleuchtet. Die Time-of-Flight-Kameraeinrichtung misst daraufhin für jeden Bildpunkt eine Zeit, die das Licht bis zum Objekt und wieder zurück braucht. Die benötigte Zeit ist direkt proportional zur Distanz zu dem Objekt. Die Time-of-Flight-Kameraeinrichtung kann somit für jeden Bildpunkt die Entfernung zu dem dort abgebildeten Objekt feststellen. Ein Messprinzip dabei entspricht dem Messprinzip von Laserscanning, weist jedoch den Vorteil auf, dass die ganze Umgebung auf einmal aufgenommen wird und nicht abgetastet werden muss. Generell können Time-of-Flight-Kameraeinrichtungen bei einem Entfernungsbereich von einigen Zentimetern bis zu ca. 40 m eingesetzt werden. Eine derartige Time-of-Flight-Kameraeinrichtung umfasst zusätzlich zu einer Beleuchtungseinheit, das heißt zusätzlich zu der Lichtquelle, eine Optik, die das von der Umgebung reflektierte Licht wieder einsammelt und die Umgebung auf dem Sensor abbildet. Diese Optik ist hier in Form des Trägermediums mit dem Einkoppelbereich und dem Auskoppelbereich realisiert. Mittels der Sensoreinrichtung der Erfassungsvorrichtung ist es also möglich, die Laufzeit des erfassten Lichts in Form von Sensordaten bereitzustellen, wobei die Sensordaten eine Laufzeitdauer des am Objekt reflektierten, von der Lichtquelle ausgesendeten Lichts beschreiben und das Licht von der Sensoreinrichtung erfasst wurde.

Die Auswerteeinrichtung ist dazu ausgebildet, die Laufzeitmessung, das heißt die Sensordaten, zum Bestimmen der Entfernung zu dem erfassten Objekt auszuwerten. Die Auswerteeinrichtung ist nämlich dazu ausgebildet, unter Berücksichtigung der Sensordaten Objektdaten bereitzustellen, die eine Relativlage des Objekts zu einem Bezugspunkt beschreiben. Hierfür können beispielsweise entsprechende Laufzeitwerte, die mit jeweiligen Entfernungswerten verknüpft sind, in der Auswerteeinrichtung hinterlegt sein. Es kann also beispielsweise die Entfernung, das heißt die Distanz, zu dem Apfel aus der von der Sensoreinrichtung anhand des erfassten Lichts gemessenen Laufzeitdauer bestimmt werden. Unter einer Relativlage des Objekts zu dem Bezugspunkt kann beispielsweise der Abstand zwischen dem Objekt und einem vorgegebenen Punkt auf einer Oberfläche der Erfassungsvorrichtung, beispielsweise auf einer Trägermediumsoberfläche, verstanden werden.

Zum Erfassen des aus dem Trägermedium ausgekoppelten Lichts liegt die zumindest eine Sensoreinrichtung beispielsweise an dem Auskoppelbereich an. Hierfür kann die zumindest eine Sensoreinrichtung beispielsweise an dem Trägermedium angeklebt werden, beispielsweise auf einer Unterweite des Trägermediums, die gegenüber einer Vorderseite des Trägermediums angeordnet ist, auf der der Einkoppelbereich bereitgestellt ist und die folglich in Richtung der Umgebung ausgerichtet ist. Auf einer Seite des Trägermediums ist folglich der Einkoppelbereich angeordnet und beispielsweise auf der gegenüberliegenden Seite der Auskoppelbereich, wobei an diesem Auskoppelbereich die zumindest eine Sensoreinrichtung angeordnet ist. Hierbei kann die zumindest eine Sensoreinrichtung an das Trägermedium angeklebt oder das Trägermedium in einer Halteeinrichtung der zumindest einen Sensoreinrichtung eingespannt sein.

Der gesamte Einkoppelbereich der Erfassungsvorrichtung dient also als Erfassungsbereich für das Licht, das letztendlich an die zumindest eine Sensoreinrichtung weitergeleitet und dort als mit dem Licht korrelierte Sensordaten bereitgestellt wird. Der Einkoppelbereich bildet folglich einen Erfassungsbereich für die zumindest eine Sensoreinrichtung. Der Einkoppelbereich umfasst daher bevorzugt eine gesamte Seite, das heißt die ganze Vorderseite, des Trägermediums. Hierdurch ergibt sich der Vorteil, dass der Erfassungsbereich der Erfassungsvorrichtung eine beliebig große zusammenhängende Fläche umfassen kann, abhängig von einer Größe und Ausdehnung des Trägermediums und insbesondere unabhängig von der Größe der zumindest einen Sensoreinrichtung. Dies ermöglicht eine großflächige Erfassung der Umgebung, wie zum Beispiel eines Raumabschnitts, da ein großer Ausschnitt der Umgebung gleichzeitig erfasst werden kann. Außerdem ist eine präzise Messung der Relativlage des Objekts in der Umgebung möglich, da der beschriebene Lichtleiter mit einer präzise messenden Time-of-Flight-Kameraeinrichtung als zumindest eine Sensoreinrichtung kombiniert wird.

Das Trägermedium mit dem Einkoppelbereich und dem Auskoppelbereich ist außerdem lichtdurchlässig und folglich transparent ausgebildet, sodass dieser Teil der Erfassungsvorrichtung als transparente Platte oder Folie, die prinzipiell sogar beidseitigen Einsatz bei entsprechender Positionierung des Einkoppelbereichs ermöglicht, ausgestaltet sein kann. Der Erfassungsbereich der Erfassungsvorrichtung ist somit unscheinbar gestaltet und kann daher unauffällig in die Umgebung integriert werden, beispielsweise mittels Befestigung auf einer Fensterscheibe. Außerdem wird mittels der Erfassungsvorrichtung mit dem flächig ausgestalteten Trägermedium eine vorteilhafte großflächige Erfassung von einem Objekt in der Umgebung möglich, wobei gleichzeitig präzise die Relativlage des Objekts zum Bezugspunkt bestimmt werden kann.

Zu der Erfindung gehören auch Ausgestaltungsformen, durch die sich zusätzliche Vorteile ergeben.

Eine Ausgestaltungsform sieht vor, dass der Einkoppelbereich und der Auskoppelbereich als Ablenkstruktur zumindest ein optisches Gitter, insbesondere ein holografisches Oberflächengitter oder ein holografisches Volumengitter, aufweisen. In diesem Zusammenhang kann die Erfassungsvorrichtung auch als HoloCam, kurz für holografische Kamera, bezeichnet werden.

Ein optisches Gitter, auch Beugungsgitter genannt, sowie dessen Wirkungsweise und Herstellungsverfahren ist, wie bereits erwähnt, allgemein bekannt, wie es beispielsweise aus der oben zitierten wissenschaftlichen Publikation hervorgeht. Grundsätzlich kann ein optisches Gitter auf zumindest abschnittsweise periodischen Strukturen, einer sogenannten Gitterstruktur, in einem Substrat beruhen. Mittels einer solchen Gitterstruktur kann ein optisches Gitter durch den physikalischen Effekt der Beugung eine Lichtlenkung, wie sie zum Beispiel von Spiegeln, Linsen oder Prismen bekannt ist, herbeiführen. Fällt Licht, das heißt fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Die Ablenkstruktur des Einkoppelbereichs oder Auskoppelbereichs kann dementsprechend auch als Beugungsstruktur bezeichnet werden.

Vorzugsweise kann ein optisches Gitter gegenüber dem einfallenden Licht richtungsselektiv oder winkelselektiv ausgebildet sein. Somit kann nur Licht, insbesondere ein Anteil des Lichts, das aus einer vorbestimmten Einfallsrichtung, zum Beispiel in einem vorbestimmten Winkel, auf ein optisches Gitter fällt, abgelenkt werden. Licht, insbesondere ein Anteil des Lichts, das aus einer anderen Richtung auf das optische Gitter fällt, wird vorzugsweise nicht abgelenkt oder umso weniger, je größer der Unterschied zur vorbestimmten Einfallsrichtung ist. Der Lichtanteil, welcher von der vorbestimmten Einfallsrichtung oder Optimaleinfallsrichtung abweicht, kann folglich vorzugsweise ungehindert durch das Substrat mit dem optischen Gitter propagieren.

Zusätzlich oder alternativ kann ein optisches Gitter noch wellenlängenselektiv oder frequenzselektiv ausgebildet sein. Somit kann nur Licht, insbesondere ein erster Anteil des Lichts mit einer vorbestimmten Wellenlänge von dem optischen Gitter in einem bestimmten Beugungswinkel abgelenkt oder gebeugt werden. Licht, insbesondere ein zweiter Anteil des Lichts mit einer anderen als der vorbestimmten Wellenlänge wird vorzugsweise nicht abgelenkt, oder umso weniger je größer der Unterschied zur vorbestimmten Wellenlänge ist. Der zweite Lichtanteil, welcher von der vorbestimmten Wellenlänge oder Optimalwellenlänge abweicht, kann folglich vorzugsweise ungehindert durch das Substrat mit dem optischen Gitter propagieren. Dadurch kann beispielsweise von polychromatischem Licht, welches auf das optische Gitter trifft, wenigstens ein monochromatischer Lichtanteil abgespaltet werden. In vorteilhafter Weise ist der Ablenkeffekt für die Optimalwellenlänge maximal und fällt zu längeren und kürzeren Wellenlängen hin, beispielsweise gemäß einer Gaußglocke, ab oder wird schwächer. Insbesondere wirkt der Ablenkeffekt nur auf einen Bruchteil des sichtbaren Lichtspektrums und/oder in einem Winkelbereich kleiner als 90 Grad.

Eine Herstellung eines optischen Gitters kann insbesondere mittels Belichtung eines Substrats, also beispielsweise fotolithografisch oder holografisch, erfolgen. In diesem Zusammenhang kann das optische Gitter dann auch als holografisches oder holografisch-optisches Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei einem holografischen Oberflächengitter kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv. Es sind jedoch auch optische Gitter bekannt die polychromatisches Licht beugen können. Diese werden als holografische Mehrfachvolumengitter (multiplexed volume holografic gratings, kurz: MVHG) bezeichnet und können beispielsweise durch Verändern der Periodizität der Gitterstruktur eines optischen Gitters oder durch Anordnen mehrerer holografisches Volumengitter hintereinander hergestellt werden.

Als Material für das besagte Substrat zum Einarbeiten eines optischen Gitters eignet sich besonders ein Polymer, insbesondere ein Fotopolymer, oder eine Folie, insbesondere eine fotosensitive Folie, zum Beispiel aus Kunststoff oder organischen Stoffen. Substrate die eine Ablenkstruktur zum Beugen von Licht, beispielsweise in Form eines optischen Gitters aufweisen, können auch als holografisch-optische Elemente (HOE) bezeichnet werden.

Durch die beschriebene Ausbildung des Einkoppelbereichs und des Auskoppelbereichs wird daher das Beugen des auf den Einkoppelbereich fallenden Lichts zur Sensoreinrichtung möglich, wodurch für die Erfassungsvorrichtung die großflächige Ausgestaltung des Trägermediums mit dem Einkoppelbereich und dem Auskoppelbereich möglich wird.

In einer besonders vorteilhaften Ausgestaltungsform der Erfindung ist es vorgesehen, dass am Trägermedium ein Lichteinkoppelbereich und ein Lichtauskoppelbereich bereitgestellt sind. Der Lichteinkoppelbereich ist wiederum als holografisches Element mit einer dritten Ablenkstruktur ausgebildet. Die dritte Ablenkstruktur ist dazu ausgelegt, das Licht, das von der Lichtquelle der Erfassungsvorrichtung auf die dritte Ablenkstruktur fällt, in das Trägermedium einzukoppeln. Ist die Lichtquelle beispielsweise derart relativ zum Trägermedium mit dem Einkoppelbereich und dem Auskoppelbereich angeordnet, dass diese das Licht nicht direkt auf das Objekt in der Umgebung aussendet, wird das Licht der Lichtquelle zunächst über den Lichteinkoppelbereich in das Trägermedium eingekoppelt. Hierdurch wird eine beispielsweise in einem äußeren Rahmen der Erfassungsvorrichtung positionierte Lichtquelle möglich, die von einem Betrachter der Erfassungsvorrichtung nicht optisch erfasst wird, weshalb die Erfassungsvorrichtung besonders unscheinbar ausgebildet sein kann.

Das Trägermedium ist dazu ausgebildet, das eingekoppelte Licht der Lichtquelle mittels interner Reflexion von dem Lichteinkoppelbereich an den Lichtauskoppelbereich zu übertragen. Der Lichtauskoppelbereich ist ebenfalls als holografisches Element ausgebildet und umfasst eine vierte Ablenkstruktur. Die vierte Ablenkstruktur ist dazu ausgelegt, dass übertragene Licht, das auf die vierte Ablenkstruktur fällt, aus dem Trägermedium auszukoppeln und in Richtung des Objekts in der Umgebung auszusenden. Sowohl während des Übertragens des Lichts von dem Objekt zu der zumindest einen Sensoreinrichtung als auch bereits auf dem Weg des noch nicht reflektierten Lichts von der Lichtquelle zum Objekt kann das Licht zumindest teilweise durch das Trägermedium geleitet und gelenkt werden.

Es ist nun möglich, dass, wenn die Lichtquelle zum Beispiel seitlich am Trägermedium befestigt wird, eine kompakte Erfassungsvorrichtung realisiert wird, die keine von dem Trägermedium mit dem Einkoppelbereich und dem Auskoppelbereich und der daran angeordneten zumindest einen Sensoreinrichtung räumlich getrennte Lichtquelle benötig. Denn die Lichtquelle kann auch räumlich betrachtet in die Erfassungsvorrichtung selbst integriert sein, sodass die Eigenschaft des Trägermediums als Lichtleiter dazu genutzt werden, das Licht der Lichtquelle erst nach dem Auskoppeln aus dem Trägermedium in die Umgebung auszusenden. Die Erfassungsvorrichtung ist somit besonders kompakt und an diversen Orten mit geringem Aufwand hinsichtlich einer Positionierung einsetzbar, da zum Beispiel eine aufwendige Justierung der Lichtquelle relativ zum Trägermedium entfällt.

Der Lichtauskoppelbereich kann beispielsweise zumindest teilweise dem Einkoppelbereich entsprechen. Alternativ oder zusätzlich dazu können sich der Lichteinkoppelbereich und der Auskoppelbereich teilweise überschneiden, zum Beispiel bei einer raumnahen Anordnung der Lichtquelle und der Sensoreinrichtung.

Eine zusätzliche Ausgestaltungsform sieht vor, dass die bereitgestellten Objektdaten eine Entfernung des Objekts von der Erfassungsvorrichtung angeben. In einem einfachen Szenario der Erfassungsvorrichtung, bei der diese genau eine Sensoreinrichtung umfasst, die als Time-of-Flight-Kameraeinrichtung ausgebildet ist, kann also mittels der Sensoreinrichtung und der Auswerteeinrichtung den Objektdaten entnommen werden, in welcher Entfernung sich das Objekt relativ zu dem Bezugspunkt der Erfassungsvorrichtung, der beispielsweise auf der Oberfläche des Trägermediums angeordnet ist, befindet und diese Entfernung beziffert werden. Dies ist möglich, da die Laufzeit des Lichts von der Lichtquelle zu der Sensoreinrichtung bekannt ist, die aus den Sensordaten zu entnehmen ist. Daher kann die Zeitdauer bis zum Eintreffen des reflektierten Lichts in der Sensoreinrichtung ermittelt und somit der Laufzeitunterschied zwischen reflektiertem und direktem Licht ermittelt werden. Anhand des Laufzeitunterschieds und der bekannten Position der Lichtquelle sowie der Sensoreinrichtung lässt sich die exakte Position des erfassten Objekts in der Umgebung berechnen. Um die Entfernung von der Erfassungsvorrichtung ermitteln zu können, reicht eine einzelne Sensoreinrichtung aus. Mit der Erfassungsvorrichtung kann somit eine großflächige Erfassung einer Umgebung erfolgen, bei der die jeweilige Entfernung von einzelnen Objekten in der Umgebung zu der Erfassungsvorrichtung bestimmt werden kann. Eine derartige Entfernungsmessung ist beispielsweise bei einer Kombination mit einer Bilderfassungseinrichtung, das heißt mit einer Kameraeinrichtung, sinnvoll, da die Entfernungsinformation, das heißt die Objektdaten, beispielsweise zum Fokussieren der Kameraeinrichtung beziehungsweise des von der Kameraeinrichtung aufgenommenen Abbilds der Umgebung hinzugezogen werden kann.

Die Erfassungsvorrichtung umfasst wenigstens zwei Sensoreinrichtungen die jeweils räumlich voneinander getrennt angeordnet sind. Die beiden Sensoreinrichtungen sind beispielsweise in einem Abstand von 1 cm bis 50 cm voneinander entfernt angeordnet. Die Auswerteeinrichtung ist nun dazu ausgelegt, anhand der Sensordaten der wenigstens zwei Sensoreinrichtungen Koordinaten des Objekts festzustellen, falls das Objekt auf der Erfassungsvorrichtung, das auf der Oberfläche des Trägermediums, positioniert ist, und die Koordinaten als Objektdaten bereitzustellen. Es kann also beispielsweise auf der Oberfläche des Trägermediums der Erfassungsvorrichtung eine berührungssensitive Bedieneinrichtung, das heißt eine sogenannte Touch-Funktionalität, bereitgestellt werden. Es handelt sich dann um 2D-Korrdianten (X,Y). Das Trägermedium mit dem Einkoppelbereich und dem Auskoppelbereich kann also beispielsweise als Deckplatte oder Deckfolie für einen berührungssensitiven Bildschirm eines Geräts ausgebildet sein. Die Erfassungsvorrichtung ist nun dazu ausgebildet, die Koordinate eines Fingers, der auf dieser Deckplatte oder Deckfolie aufgelegt ist, zu bestimmen. Denn das an dem auf der Deckplatte oder der Deckfolie positionierten Finger des Benutzers reflektierte Licht kann jeweils von den wenigstens zwei Sensoreinrichtung erfasst werden, sodass anhand der von diesen beiden Sensoreinrichtungen gewonnenen Sensordaten letztendlich die Relativlage des Fingers zu einem Bezugspunkt beschrieben werden kann, wobei hier als Relativlage des Objekts die entsprechenden Koordinaten des Fingers angegeben werden. Hierdurch kann also beispielsweise die berührungssensitive Funktionalität des Bildschirms, auf dem die Erfassungsvorrichtung angeordnet ist, zumindest unterstützt werden, da die Position des Fingers auf der Oberfläche festgestellt und bereitgestellt wird. Hierdurch wird die Erkennung einer Position einer Berührung der Erfassungsvorrichtung ermöglicht. Aufgrund der großflächigen Ausgestaltung des Trägermediums mit dem Einkoppelbereich und dem Auskoppelbereich kann eine relativ große Bildschirmoberfläche mit der Erfassungsvorrichtung als Deckplatte oder Deckfolie beschichtet sein und dadurch die präzise Bestimmung der Koordinaten des Objekts, wie dem Finger, auf der Erfassungsvorrichtung bereitgestellt werden. Insbesondere ist für die beschriebene Erfassungsvorrichtung kein Drucksensor nötig, um zumindest die Relativlage des Objekts auf einem mit der beschriebenen Deckplatte oder Deckfolie bedeckten Bildschirm bestimmen zu können.

Eine weitere besondere Ausgestaltungsform der Erfindung sieht vor, dass die Erfassungsvorrichtung wenigstens drei jeweils räumlich voneinander getrennte Sensoreinrichtungen umfasst. Die Auswerteeinrichtung ist dazu ausgelegt, anhand der Sensordaten der wenigstens drei Sensoreinrichtungen eine räumliche Anordnung des Objekts in der Umgebung relativ zur Erfassungsvorrichtung festzustellen und als Objektdaten bereitzustellen. Für eine Messung der Relativlage im dreidimensionalen Raum sind also entsprechend wenigstens drei Sensoreinrichtungen nötig. Diese sind beispielsweise an zumindest drei verschiedenen Ecken des beispielsweise großflächig rechteckig oder quadratisch ausgeformten Trägermediums mit dem Einkoppelbereich und dem Auskoppelbereich angeordnet. Anhand der nun mindestens drei bereitgestellten Sensordaten von jeweils unterschiedlichen Sensoreinrichtung, die jeweils zumindest die Laufzeitdauer des am Objekt reflektierten, von der Lichtquelle ausgesendeten Lichts beschreiben, können nun Objektdaten bereitgestellt werden, die räumliche Koordinaten und somit die räumliche Position des Objekts relativ beispielsweise zum Bezugspunkt der Erfassungsvorrichtung angeben. Es kann beispielsweise ermittelt werden, wo auf der Oberfläche des Trägermediums mit dem Einkoppelbereich und dem Auskoppelbereich, und auch in welchem Abstand zu der Oberfläche an diesem Ort, das Objekt angeordnet ist. Die Relativlage des Objekts zu dem Bezugspunkt kann also die räumliche Relativlage des Objekts zu dem Bezugspunkt beschreiben. Die Erfassungsvorrichtung ermöglicht somit eine zuverlässige und gründliche großflächige Erfassung des Objekts in der Umgebung der Erfassungsvorrichtung hinsichtlich der räumlichen Koordinaten dieses Objekts relativ zur Erfassungsvorrichtung.

In einer besonders vorteilhaften Ausgestaltungsform der Erfindung ist es vorgesehen, dass der Einkoppelbereich und der Auskoppelbereich einstückig mit dem Trägermedium ausgebildet sind oder das Trägermedium als separates Element zu dem Einkoppelbereich und dem Einkoppelbereich ausgebildet ist. Im ersten Fall können der Einkoppelbereich und der Auskoppelbereich somit beispielsweise direkt an einer Oberfläche des Trägermediums eingearbeitet sein. Das heißt die Ablenkstruktur kann beispielsweise in die Oberfläche des Trägermediums geätzt oder gelasert sein. Somit kann das Trägermedium selbst als HOE ausgebildet sein. Im zweiten Fall können Einkoppelbereich, Auskoppelbereich und Trägermedium separat ausgebildet sein. Dabei können der Einkoppelbereich und der Auskoppelbereich beispielsweise wenigstens ein erstes Element bilden, und das Trägermedium kann ein zweites Element bilden, das an dem ersten Element anliegt. Somit können der Einkoppelbereich und der Auskoppelbereich in wenigstens einem HOE ausgebildet sein. Beispielsweise können der Einkoppelbereich und der Auskoppelbereich in unterschiedlichen Abschnitten einer holografischen Folie oder Platte ausgebildet sein. Zum Befestigen der Folie oder Platte an dem Trägermedium kann die Folie der Platte an das Trägermedium angeklebt sein. Alternativ kann die holografische Folie auch als Adhäsionsfolie ausgebildet sein und direkt, also ohne Klebstoff, durch molekulare Kräfte an der Oberfläche des Trägermediums haften. Die Erfassungsvorrichtung mit dem Trägermedium und dem daran angeordneten Einkoppelbereich und Auskoppelbereich kann somit auf verschiedene Arten und insbesondere kostengünstig hergestellt sein.

In einer bevorzugten Ausgestaltungsform der Erfindung ist es vorgesehen, dass die Lichtquelle dazu ausgebildet ist, gepulstes Licht auszusenden. Hierdurch wird eine besonders einfache Form von Messungen mit einer Time-of-Flight-Kameraeinrichtung möglich, denn diese arbeitet üblicherweise mit ausgesendeten Lichtpulsen. Hierbei wird die Beleuchtung, das heißt die Lichtquelle, für einen kurzen Moment eingeschaltet, woraufhin der Lichtimpuls die Umgebung beleuchtet und an dem Objekt in der Umgebung reflektiert wird. Abhängig von der Distanz zu dem Objekt erfährt das auf das Objekt treffende Licht eine Verzögerung. Aufgrund der Geschwindigkeit des Lichts von Lichtgeschwindigkeit sind diese Zeiten jedoch sehr klein. Da die Pulslänge jedoch sehr klein gewählt wird und beispielsweise nur 50 ns beträgt, können Distanzen zu Objekten von in diesem Beispiel bis zu sieben bis acht Metern gemessen werden. Alternativ oder zusätzlich dazu kann das Licht moduliert ausgesendet werden, um beispielsweise besonders genaue und präzise Sensordaten bereitzustellen zu können.

Eine weitere Ausgestaltungsform sieht vor, dass die Erfassungsvorrichtung eine Bilderfassungseinrichtung umfasst, die dazu ausgebildet ist, das von dem Auskoppelbereich ausgekoppelte Licht zu erfassen und in Form von Bilddaten, die mit dem erfassten Licht korrelieren, bereitzustellen. Bevorzugt kann die Bilderfassungseinrichtung als Bildsensor oder Kamera, jeweils mit oder ohne abbildende Optik, wie beispielsweise einer Linse oder einem Linsensystem, realisiert sein. Die Bilderfassungseinrichtung ist also zum fotographischen und/oder videobasierten Erzeugen eines Abbilds des Objekts in der Umgebung ausgelegt. Die Erfassungsvorrichtung kann also insgesamt als eine Vorrichtung zum Aufzeichnen statischer oder bewegter Bilder, die ein Abbild des Objekts in der Umgebung der Erfassungsvorrichtung darstellen, ausgebildet sein. Die Bilderfassungseinrichtung kann insbesondere als Bildsensor, beispielsweise als CCD-Sensor (charged coupled device - ladungsgekoppelte Vorrichtung) oder als CMOS-Sensor (complementary metaloxide semi conductor - komplementärer Metalloxid-Halbleiter) ausgebildet sein. Bei der Ausgestaltung der Bilderfassungseinrichtung als Bildsensor kann das Trägermedium, an dem der Einkoppelbereich und der Auskoppelbereich angeordnet sind, zusätzlich die Aufgabe eines Objektivs, also einer abbildenden Optik übernehmen. Alternativ kann die Bilderfassungseinrichtung auch als Kamera oder Fotoapparat, insbesondere als Mikrokamera, wie sie beispielsweise in einem Smartphone ausgebildet ist, mit eigener abbildender Optik realisiert sein. Insgesamt kann der gesamte Einkoppelbereich der Erfassungsvorrichtung als Erfassungsbereich für Licht dienen, das letztendlich an die Bilderfassungseinrichtung weitergeleitet und dort als mit dem Licht korrelierte Bilddaten bereitgestellt wird. Der Einkoppelbereich kann also eine Art Kamerasensor für die Bilderfassungseinrichtung bilden. Dies ermöglicht, dass zusätzlich zu der Entfernungsinformation des Objekts das Objekt selbst abgebildet wird, so dass eine eindeutige Zuordnung der optischen Ausgestaltung des Objekts zu der erfassten Entfernung, den bestimmten Koordinaten und/oder der bestimmten räumlichen Anordnung des Objekts möglich ist.

Eine zusätzliche Ausgestaltungsform der Erfindung sieht vor, dass die Auswerteeinrichtung dazu ausgebildet ist, unter Berücksichtigung der Objektdaten und einem vorgegebenen Interpretationskriterium die Bilder auszuwerten und ein die interpretierten Bilddaten beschreibendes Interpretationssignal bereitzustellen. Das Interpretationskriterium kann beispielsweise mithilfe von Methoden des maschinellen Lernens, das heißt mithilfe von Methoden der künstlichen Intelligenz, wie zum Beispiel mithilfe eines künstlichen neuronalen Netzwerks, bestimmt werden. Dabei kann beispielsweise in der Auswerteeinrichtung hinterlegt sein, welche typische Größe, Form, Farbe und/oder Oberflächenbeschaffenheit bestimmte vorgegebene Musterobjekte aufweisen. Beispielsweise können entsprechende Daten hinterlegt sein, die einen typischen Apfel als Musterobjekt beschreiben. Unter Berücksichtigung dieser Daten von Musterobjekten, der gewonnen Bilddaten sowie der Objektdaten des Objekts kann nun beispielsweise mithilfe der Auswerteeinrichtung erkannt werden, dass sich in der vorgegebenen Entfernung ein Apfel befindet. Diese Information kann daraufhin mithilfe des entsprechenden Interpretationssignals bereitgestellt werden. Hierdurch wird es letztendlich möglich, exakte Rückschlüsse auch auf Gesten oder Handlungen aus den mittels der Erfassungsvorrichtung gewonnenen Daten ableiten zu können. Beispielsweise kann unterschieden und erkannt werden, ob eine Hand, die sich vor der Erfassungsvorrichtung befindet, eine Faust oder einen ausgestreckten Zeigefinger zeigt, wenn zum Beispiel entsprechende Musterobjektdaten für diese Handgesten hinterlegt sind und folglich erkannt oder zumindest erlernt werden können. Mit der Erfassungsvorrichtung ist somit in einer große Umgebung eine auf Messungen von zumindest einer Time-of-Flight-Kameraeinrichtung basierende Gestenerkennung möglich. Hierbei kann auf bereits bekannte Methoden der Auswertung und Interpretation von Bilddaten zurückgegriffen werden.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer Erfassungsvorrichtung, vor der ein Objekt positioniert ist;
- Fig. 2: eine schematische Darstellung einer Erfassungsvorrichtung, bei der eine Lichtquelle an einem Trägermedium angeordnet ist;
- Fig. 3: eine schematische Darstellung einer Erfassungsvorrichtung mit zwei Sensoreinrichtung; und
- Fig. 4: eine schematische Darstellung einer Erfassungsvorrichtung mit drei Sensoreinrichtungen.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

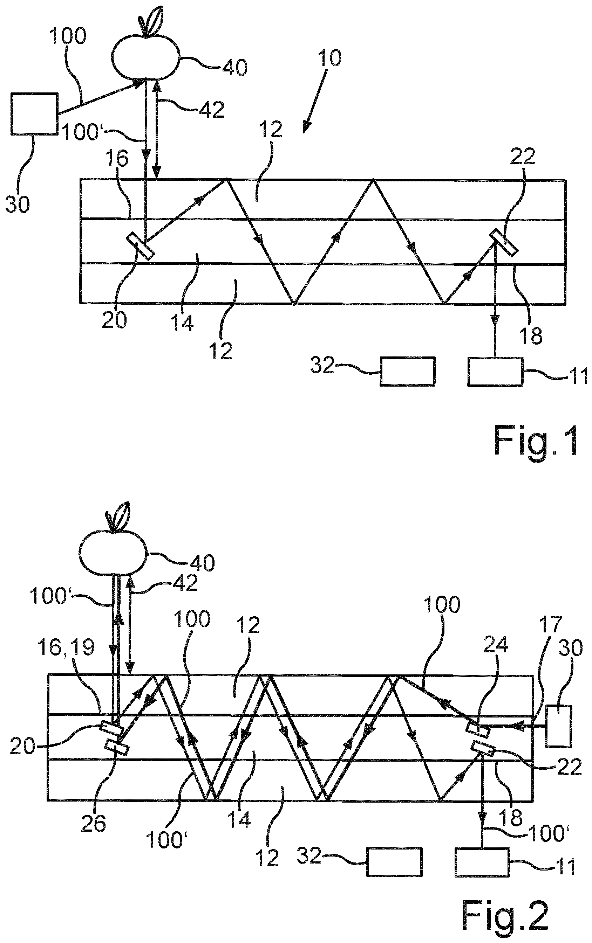

In Fig. 1 ist eine Erfassungsvorrichtung 10 skizziert, die eine Sensoreinrichtung 11, eine Auswerteeinrichtung 32, eine Lichtquelle 30 sowie ein Trägermedium 12 umfasst. Das Trägermedium 12 ist als Lichtleiter ausgebildet, an dem ein Einkoppelbereich 16 und ein Auskoppelbereich 18 bereitgestellt sind. Die Lichtquelle 30 ist dazu ausgebildet, Licht 100 auszusenden. In diesem Beispiel ist die Lichtquelle 30 räumlich getrennt von dem Trägermedium 12 angeordnet. Das Licht 100 der Lichtquelle 30 trifft auf ein Objekt 40, das hier in Form eines Apfels skizziert ist, der in einer Umgebung der Erfassungsvorrichtung 10 angeordnet ist. An diesem Objekt 40 wird das Licht 100 reflektiert, das im Folgenden als reflektiertes Licht 100' bezeichnet wird. Das Objekt 40 befindet sich in einer Entfernung 42 von einer Oberfläche des Trägermediums 12.

Der Einkoppelbereich 16 ist als holografisches Element 14 mit einer ersten Ablenkstruktur 20 ausgebildet. Die erste Ablenkstruktur 20 ist dazu ausgelegt, das reflektierte Licht 100', das als Licht 100 von einer Lichtquelle 30 ausgesendet und an dem Objekt 40 in der Umgebung der Erfassungsvorrichtung 10 reflektiert wurde, in das Trägermedium 12 einzukoppeln. Das Trägermedium 12 ist wiederum dazu ausgebildet, das eingekoppelte reflektierte Licht 100' mit interner Reflektion von dem Einkoppelbereich 16 an den Auskoppelbereich 18 zu übertragen. Der Auskoppelbereich 18 ist als holografisches Element 14 mit einer zweiten Ablenkstruktur 22 ausgebildet. Die zweite Ablenkstruktur 22 ist dazu ausgelegt, das übertragene reflektierte Licht 100', das auf die zweite Ablenkstruktur 22 fällt, aus dem Trägermedium 12 auszukoppeln.

Die Sensoreinrichtung 11 ist als eine Time-of-Flight-Kameraeinrichtung ausgebildet. Die Sensoreinrichtung 11 ist dazu ausgelegt, das im Auskoppelbereich 18 ausgekoppelte reflektierte Licht 100' zu erfassen und in Form von Sensordaten bereitzustellen. Die Sensordaten beschreiben eine Laufzeitdauer des am Objekt 40 reflektierten Lichts 100', das von der Sensoreinrichtung 11 erfasst wurde. Die Auswerteeinrichtung 32 ist dazu ausgebildet, unter Berücksichtigung der Sensordaten Objektdaten betreffend das Objekt 40 bereitzustellen. Diese Objektdaten beschreiben eine Relativlage des Objekts 40 zu einem Bezugspunkt der Erfassungsvorrichtung 10. Der Bezugspunkt der Erfassungsvorrichtung 10 ist beispielsweise ein vorgegebener Punkt auf der Oberfläche des Trägermediums 12, sodass eine Relativlage des Objekts 40 zur Erfassungsvorrichtung 10 durch die Entfernung 42 angegeben beziehungsweise beschrieben werden kann.

Der Einkoppelbereich 16 sowie der Auskoppelbereich 18 weisen als jeweilige Ablenkstruktur 20, 22 zumindest ein optisches Gitter auf, das insbesondere als holografischen Volumengitter oder holografische Oberflächengitter ausgebildet ist. Der Einkoppelbereich 16 und der Auskoppelbereich 18 sind entweder einstückig mit dem Trägermedium 12 ausgebildet oder alternativ dazu kann das Trägermedium 12 als separates Element zu dem Einkoppelbereich 16 und dem Auskoppelbereich 18 ausgebildet sein. Die Lichtquelle 30 ist dazu ausgebildet, gepulstes Licht 100 auszusenden.

In Fig. 2 ist die Erfassungsvorrichtung 10 mit einer an das Trägermedium 12 gekoppelten Lichtquelle 30 skizziert. Die Lichtquelle 30 ist an einem Lichteinkoppelbereich 17 angeordnet, der ebenfalls von dem Trägermedium 12 bereitgestellt wird. Der Lichteinkoppelbereich 17 ist als holografisches Element 14 mit einer dritten Ablenkstruktur 24 ausgebildet. Die dritte Ablenkstruktur 24 ist dazu ausgelegt, das Licht 100, das von der Lichtquelle 30 auf die dritte Ablenkstruktur 24 fällt, in das Trägermedium 12 einzukoppeln. Das Trägermedium 12 ist dazu ausgebildet, das derart eingekoppelte Licht 100 mittels interner Reflexion von dem Lichteinkoppelbereich 17 an einen Lichtauskoppelbereich 19 zu übertragen, wobei der Lichtauskoppelbereich 19 ebenfalls von dem Trägermedium 12 bereitgestellt wird. Der Lichtauskoppelbereich 19 ist als holografisches Element 14 mit einer vierten Ablenkstruktur 26 ausgebildet. Die vierte Ablenkstruktur 26 ist dazu ausgelegt, das übertragene Licht 100, das auf die vierte Ablenkstruktur 26 fällt, aus dem Trägermedium 12 auszukoppeln und in Richtung des Objekts 40 in der Umgebung auszusenden. In Fig. 2 wird also eine Erfassungsvorrichtung 10 gezeigt, bei der sowohl das Licht 100 der Lichtquelle 30 als auch das an dem Objekt 40 reflektierte Licht 100' jeweils durch das als Lichtleiter ausgebildete Trägermedium 12 geleitet wird. Der Verlauf des reflektierten Lichts 100' entspricht hierbei dem Verlauf des reflektierten Lichts 100', der bereits im Zusammenhang mit Fig. 1 beschrieben wurde.

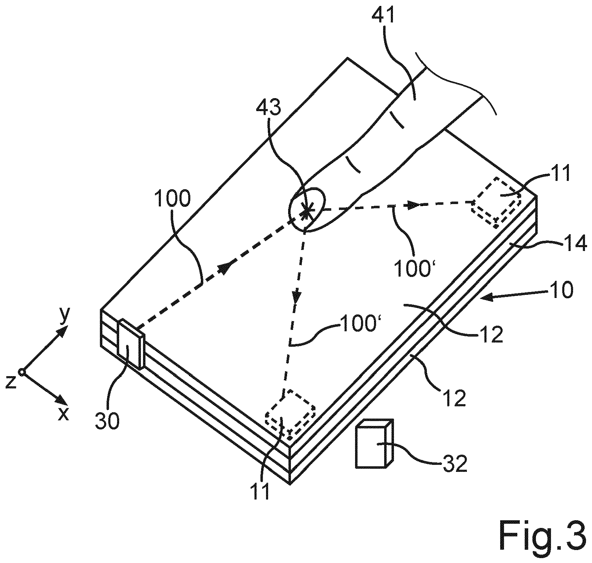

In Fig. 3 ist die Erfassungsvorrichtung 10 mit zwei Sensoreinrichtungen 11 skizziert. Hierbei sind die Sensoreinrichtungen 11 jeweils unterhalb einer dem Objekt 40 zugewandten Vorderseite des Trägermediums 12 angeordnet. Als Objekt 40 ist in Fig. 3 ein Finger 41 skizziert, der an vorgegebenen Koordinaten 43, die in Fig. 3 mit einem Kreuz symbolisiert sind, das Trägermedium 12 berührt. Die Lichtquelle 30, die hier an einer Außenseite des Trägermediums 12 angeordnet ist, das heißt dem Aufbau in Fig. 2 entspricht, sendet nun Licht 100 durch das Trägermedium 12 zum Lichtauskoppelbereich 19, der hier dem Einkoppelbereich 16 und folglich einem Bereich der Oberfläche des Trägermediums 12 auf der Vorderseite zur Umgebung hin entspricht. Das am Finger 41 reflektierte Licht 100' wird über den Einkoppelbereich 16 in das Trägermedium 12 eingekoppelt und zu den zwei Sensoreinrichtungen 11 übermittelt. Die zwei Sensoreinrichtungen 11 sind jeweils räumlich voneinander getrennt angeordnet. Die Auswerteeinrichtung 32 ist nun dazu ausgelegt, anhand der Sensordaten der zwei Sensoreinrichtungen 11 die Koordinaten 43 des Fingers 41 auf der Erfassungsvorrichtung 10 festzustellen und als Objektdaten bereitzustellen. Dadurch, dass nun zwei Sensoreinrichtungen 11 bereitgestellt sind, kann also eine zusätzliche Koordinate 43, das heißt insgesamt eine x- und y-Koordinate 43 des Objekts 40, bei dem es sich hier um den Finger 41 handelt, bestimmt werden.

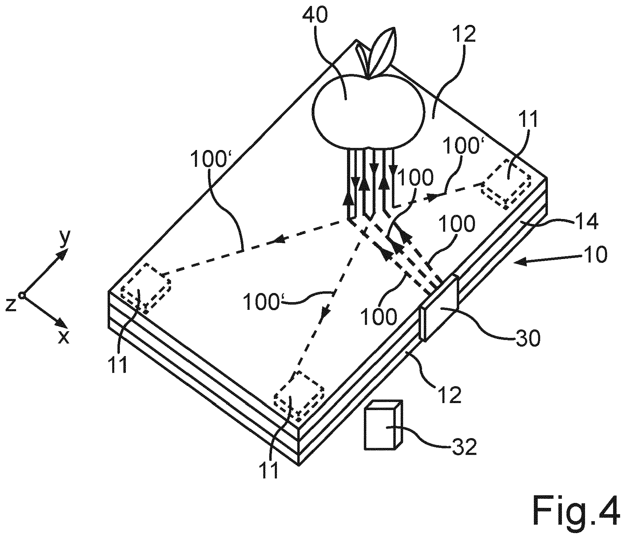

In Fig. 4 ist die Erfassungsvorrichtung 10 mit nun drei Sensoreinrichtungen 11 skizziert. Die drei Sensoreinrichtungen 11 sind wieder räumlich voneinander getrennt am Trägermedium 12 im Bereich jeweiliger Auskoppelbereiche 18 angeordnet. Die Auswerteeinrichtung 32 ist nun dazu ausgelegt, anhand der Sensordaten der drei Sensoreinrichtungen 11 eine räumliche Anordnung des Objekts 40, das in der Umgebung der Erfassungsvorrichtung 10 angeordnet ist, relativ zur Erfassungsvorrichtung 10 festzustellen und als Objektdaten bereitzustellen.

Die Erfassungsvorrichtung 10 kann außerdem eine Bilderfassungseinrichtung umfassen, die dazu ausgebildet ist, das von dem Auskoppelbereich 18 ausgekoppelte Licht 100' zu erfassen und in Form von Bilddaten, die mit dem erfassten Licht 100' korrelieren, bereitzustellen. Es ist somit auch eine optische Abbildung des Objekts 40 möglich. Die Auswerteeinrichtung 32 kann nun dazu ausgebildet sein, unter Berücksichtigung der Objektdaten und einem vorgegebenen Interpretationskriterium die Bilddaten auszuwerten und ein die interpretierten Bilddaten beschreibendes Interpretationssignal bereitzustellen. Hiermit können beispielsweise eine Bilderkennung sowie eine Gesten- oder Handlungserkennung durchgeführt werden. Beispielsweise kann eine Bewegung des Objekts 40 relativ zur Erfassungsvorrichtung 10 erfasst und außerdem interpretiert werden, so dass beispielsweise das Interpretationssignal umfasst, dass der Apfel, das heißt das Objekt 40, insgesamt um 5 cm nach links verschoben und außerdem um einen Winkel von 30° rotiert wurde.

Insgesamt zeigen die Beispiele, wie durch die Erfindung eine Berührungs- und Gestenerkennung mittels einer Time-of-Flight-Kameraeinrichtung sowie mittels eines holografisch optischen Elements (HOE) bereitgestellt werden kann. Hierbei wird das zumindest einseitig transparente Trägermedium 12, das als HOE ausgebildet ist, um die zumindest eine Sensoreinrichtung 11 ergänzt, die als Time-of-Flight-Kameraeinrichtung zur Erfassung von dreidimensionalen Objekten ausgebildet ist. Das Objekt 40, das hiermit erfasst wird, kann sich vor oder hinter dem Trägermedium 12 befinden. Hierdurch ist letztendlich eine großflächige Erfassung der Umgebung der Erfassungsvorrichtung 10 möglich. Gleichzeitig erfolgt eine präzise Messung in der Umgebung beziehungsweise auf der Oberfläche der Erfassungsvorrichtung 10, deren Trägermedium 12 mit Einkoppelbereich 16 und Auskoppelbereich 18 beispielsweise als transparente flächige Deckplatte oder Deckfolie für einen beispielsweise berührungssensitiven Bildschirm eines Geräts, wie zum Beispiel einem mobilen Endgerät (Smartphone), ausgebildet ist. Außerdem werden eine Messung über einer bisher nicht nutzbaren transparenten Fläche, beispielsweise des Bildschirms des Geräts, auf dem die flächige Deckplatte oder Deckfolie befestigt ist, sowie ein beidseitiger Einsatz der Erfassungsvorrichtung 10 bei einem Trägermedium 12 mit gegenüberliegenden Einkoppelbereichen 16 möglich.

Hierfür wird letztendlich gepulstes Licht 100 von der Lichtquelle 30 über eine holografische Funktion, das heißt über das Trägermedium 12, mit dem Einkoppelbereich 16 und dem Auskoppelbereich 18 in das Trägermedium 12 eingekoppelt, in diesem verteilt und über den Auskoppelbereich 18 ausgekoppelt. Trifft dieses Licht 100 auf das Objekt 40, wird es zurück zu dem Trägermedium 12 reflektiert, dort eingekoppelt und an die zumindest eine Sensoreinrichtung 11 übermittelt. Da eine Laufzeit des Lichts 100 von der Lichtquelle 30 zu der jeweiligen Sensoreinrichtung 11 bekannt ist, kann die Zeit bis zum Eintreffen des reflektierten Lichts 100' gemessen und somit der Laufzeitunterschied zwischen reflektiertem Licht 100' und direktem Licht 100 ermittelt werden. Über diesen Laufzeitunterschied und die bekannte Position der Lichtquelle 30 sowie der einzelnen Sensoreinrichtungen 11 lässt sich die exakte Position des erfassten Gegenstands im Raum, das heißt des Objekts 40 in der Umgebung, berechnen. Hierdurch werden eine Entfernung 42, Koordinaten 43 und/oder eine räumliche Anordnung des Objekts 40 in der Umgebung erfassbar. Grundsätzlich lässt sich hierbei sagen, dass jede zu erfassende Dimension eine Sensoreinrichtung 11 benötigt. Für eine geradlinige Messung in einer Ebene ist folglich die eine Sensoreinrichtung 11 ausreichend, für eine Messung auf einer Fläche reichen zwei Sensoreinrichtungen 11 aus (siehe Fig. 3). Für eine Messung im Raum, das heißt zur Bestimmung der räumlichen Anordnung des Objekts 40, sind entsprechend mindestens drei Sensoreinrichtungen 11 nötig (siehe Fig. 4). Die Erfassungsvorrichtung 10 kann außerdem mit der Erkennung von Bildinhalten kombiniert werden, um exaktere Rückschlüsse auf Gesten oder Handlungen ableiten zu können. Als Geste kann beispielsweise erkannt werden, ob der Benutzer eine Faust oder einen ausgestreckten Zeigefinger anzeigt.

## Patentansprüche

1. Erfassungsvorrichtung (10) mit zumindest einer Sensoreinrichtung (11), einer Auswerteeinrichtung (32), einer Lichtquelle (30) sowie einem flächigen Trägermedium (12), wobei das flächige Trägermedium (12) als Lichtleiter ausgebildet ist, an dem ein Einkoppelbereich (16) und ein Auskoppelbereich (18) bereitgestellt sind, wobei
- die Lichtquelle (30) dazu ausgebildet ist, Licht (100) auszusenden;
- der Einkoppelbereich (16) als holografisches Element (14) mit einer ersten Ablenkstruktur (20) ausgebildet ist, die dazu ausgelegt ist, Licht (100'), das von der Lichtquelle (30) ausgesendet und an einem Objekt (40) in einer Umgebung der Erfassungsvorrichtung (10) reflektiert wird, in das flächige Trägermedium (12) einzukoppeln;
- das flächige Trägermedium (12) dazu ausgebildet ist, das eingekoppelte reflektierte Licht (100') mittels interner Reflexion von dem Einkoppelbereich (16) an den Auskoppelbereich (18) zu übertragen;
- der Auskoppelbereich (18) als holografisches Element (14) mit einer zweiten Ablenkstruktur (22) ausgebildet ist, die dazu ausgelegt ist, das übertragene reflektierte Licht (100'), das auf die zweite Ablenkstruktur (22) fällt, aus dem flächigen Trägermedium (12) auszukoppeln;
- die zumindest eine Sensoreinrichtung (11) eine Time-of-Flight-Kameraeinrichtung ist, die dazu ausgebildet ist, das im Auskoppelbereich (18) ausgekoppelte Licht (100') zu erfassen und mit dem erfassten Licht (100') korrelierte Sensordaten bereitzustellen, die eine Laufzeitdauer des von der Lichtquelle (30) ausgesendeten und an dem Objekt (40) reflektierten Lichts (100') beschreiben; und
- die Auswerteeinrichtung (32) dazu ausgebildet ist, unter Berücksichtigung der Sensordaten Objektdaten bereitzustellen, die eine Relativlage des Objekts (40) zu einem vorbestimmten Bezugspunkt beschreiben;
**dadurch gekennzeichnet, dass** die Erfassungsvorrichtung (10) wenigstens zwei jeweils räumlich voneinander getrennte Sensoreinrichtungen (11) umfasst und die Auswerteeinrichtung (32) dazu ausgelegt ist, anhand der Sensordaten der wenigstens zwei Sensoreinrichtungen (11) Koordinaten (43) des Objekts (40) auf der Erfassungsvorrichtung (10) festzustellen und als Objektdaten bereitzustellen.

2. Erfassungsvorrichtung (10) nach dem vorhergehenden Anspruch, wobei der Einkoppelbereich (16) und der Auskoppelbereich (18) als jeweilige Ablenkstruktur (20, 22) zumindest ein optisches Gitter, insbesondere ein holografisches Volumengitter oder ein holografisches Oberflächengitter, aufweisen.

3. Erfassungsvorrichtung (10) nach einem der vorhergehenden Ansprüche, wobei am Trägermedium (12) ein Lichteinkoppelbereich (17) und ein Lichtauskoppelbereich (19) bereitgestellt sind, wobei
- der Lichteinkoppelbereich (17) als holografisches Element (14) mit einer dritten Ablenkstruktur (24) ausgebildet ist, die dazu ausgelegt ist, Licht (100), das von der Lichtquelle (30) der Erfassungsvorrichtung (10) auf die dritte Ablenkstruktur (24) fällt, in das flächige Trägermedium (12) einzukoppeln;
- das flächige Trägermedium (12) dazu ausgebildet ist, das eingekoppelte Licht (100) mittels interner Reflexion von dem Lichteinkoppelbereich (17) an den Lichtauskoppelbereich (19) zu übertragen; und
- der Lichtauskoppelbereich (19) als holografisches Element (14) mit einer vierten Ablenkstruktur (26) ausgebildet ist, die dazu ausgelegt ist, das übertragene Licht (100), das auf die vierte Ablenkstruktur (26) fällt, aus dem flächigen Trägermedium (12) auszukoppeln und in Richtung des Objekts (40) in der Umgebung auszusenden.

4. Erfassungsvorrichtung (10) nach einem der vorhergehenden Ansprüche, wobei die bereitgestellten Objektdaten eine Entfernung (42) des Objekts (40) von der Erfassungsvorrichtung (10) angeben.

5. Erfassungsvorrichtung (10) nach einem der vorhergehenden Ansprüche, wobei die Erfassungsvorrichtung (10) wenigstens drei jeweils räumlich voneinander getrennte Sensoreinrichtungen (11) umfasst und die Auswerteeinrichtung (32) dazu ausgelegt ist, anhand der Sensordaten der wenigstens drei Sensoreinrichtungen (11) eine räumliche Anordnung des Objekts (40) in der Umgebung relativ zur Erfassungsvorrichtung (10) festzustellen und als Objektdaten bereitzustellen.

6. Erfassungsvorrichtung (10) nach einem der vorhergehenden Ansprüche, wobei der Einkoppelbereich (16) und der Auskoppelbereich (18) einstückig mit dem flächigen Trägermedium (12) ausgebildet sind, oder das flächige Trägermedium (12) als separates Element zu dem Einkoppelbereich (16) und dem Auskoppelbereich (18) ausgebildet ist.

7. Erfassungsvorrichtung (10) nach einem der vorhergehenden Ansprüche, wobei die Lichtquelle (30) dazu ausgebildet ist, gepulstes Licht (100) auszusenden.

8. Erfassungsvorrichtung (10) nach einem der vorhergehenden Ansprüche, wobei die Erfassungsvorrichtung (10) eine Bilderfassungseinrichtung umfasst, die dazu ausgebildet ist, das von dem Auskoppelbereich (18) ausgekoppelte Licht (100') zu erfassen und in Form von Bilddaten, die mit dem erfassten Licht (100') korrelieren, bereitzustellen.

9. Erfassungsvorrichtung (10) nach dem vorhergehenden Anspruch, wobei die Auswerteeinrichtung (32) dazu ausgebildet ist, unter Berücksichtigung der Objektdaten und einem vorgegebenen Interpretationskriterium die Bilddaten auszuwerten und ein die interpretierten Bilddaten beschreibendes Interpretationssignal bereitzustellen.

## Claims

1. A capturing device (10) with at least one sensor device (11), an evaluation device (32), a light source (30) as well as an extensive carrier medium (12), wherein the extensive carrier medium (12) is formed as a light guide, on which a coupling-in area (16) and an outcoupling area (18) are provided, wherein
- the light source (30) is formed to emit light (100);
- the coupling-in area (16) is formed as a holographic element (14) with a first deflecting structure (20), which is adapted to couple light (100'), which is emitted by the light source (30) and reflected on an object (40) in an environment of the capturing device (10), into the extensive carrier medium (12);
- the extensive carrier medium (12) is formed to transfer the coupled-in reflected light (100') from the coupling-in area (16) to the outcoupling area (18) by means of internal reflection;
- the outcoupling area (18) is formed as a holographic element (14) with a second deflecting structure (22), which is adapted to couple the transferred reflected light (100'), which is incident on the second deflecting structure (22), out of the extensive carrier medium (12);
- the at least one sensor device (11) is a time-of-flight camera device, which is formed to capture the light (100') coupled out in the outcoupling area (18) and to provide sensor data correlated with the captured light (100'), which describes a time-of-flight duration of the light (100') emitted by the light source (30) and reflected on the object (40); and
- the evaluation device (32) is formed to provide object data considering the sensor data, which describes a relative position of the object (40) to a predetermined reference point;
**characterized in that**
the capturing device (10) includes at least two sensor devices (11) respectively spatially separated from each other, and the evaluation device (32) is adapted to determine coordinates (43) of the object (40) on the capturing device (10) based on the sensor data of the at least two sensor devices (11) and to provide them as object data.

2. The capturing device (10) according to the preceding claim, wherein the coupling-in area (16) and the outcoupling area (18) comprise at least one optical grating, in particular a holographic volume grating or a holographic surface grating, as the respective deflecting structure (20, 22).

3. The capturing device (10) according to any one of the preceding claims, wherein a light coupling-in area (17) and a light outcoupling area (19) are provided on the carrier medium (12), wherein
- the light coupling-in area (17) is formed as a holographic element (14) with a third deflecting structure (24), which is adapted to couple light (100), which is incident from the light source (30) of the capturing device (10) on the third deflecting structure (24), into the extensive carrier medium (12);
- the extensive carrier medium (12) is formed to transfer the coupled-in light (100) from the light coupling-in area (17) to the light outcoupling area (19) by means of internal reflection; and
- the light outcoupling area (19) is formed as a holographic element (14) with a fourth deflecting structure (26), which is adapted to couple the transferred light (100), which is incident on the fourth deflecting structure (26), out of the extensive carrier medium (12) and to emit it towards the object (40) in the environment.

4. The capturing device (10) according to any one of the preceding claims, wherein the provided object data indicates a distance (42) of the object (40) from the capturing device (10).

5. The capturing device (10) according to any one of the preceding claims, wherein the capturing device (10) includes at least three sensor devices (11) respectively spatially separated from each other, and the evaluation device (32) is adapted to determine a spatial arrangement of the object (40) in the environment in relation to the capturing device (10) based on the sensor data of the at least three sensor devices (11) and to provide it as object data.

6. The capturing device (10) according to any one of the preceding claims, wherein the coupling-in area (16) and the outcoupling area (18) are formed integrally with the extensive carrier medium (12), or the extensive carrier medium (12) is formed as a separate element to the coupling-in area (16) and the outcoupling area (18).

7. The capturing device (10) according to any one of the preceding claims, wherein the light source (30) is formed to emit pulsed light (100).

8. The capturing device (10) according to any one of the preceding claims, wherein the capturing device (10) includes an image capturing device, which is formed to capture the light (100') coupled out of the outcoupling area (18) and to provide it in the form of image data, which correlates with the captured light (100').

9. The capturing device (10) according to the preceding claim, wherein the evaluation device (32) is formed to evaluate the image data considering the object data and a preset interpretation criterion and to provide an interpretation signal describing the interpreted image data.

## Revendications

1. Dispositif de capture (10) ayant au moins un dispositif de capteur (11), un dispositif d'évaluation (32), une source de lumière (30) ainsi qu'un support plat (12), le support plat (12) étant mis en oeuvre sous la forme d'un conduit de lumière sur lequel une zone de couplage (16) et une zone de découplage (18) sont fournies,
- la source de lumière (30) étant configurée pour émettre de la lumière (100) ;
- la zone de couplage (16) étant mise en oeuvre sous la forme d'un élément holographique (14) avec une première structure de déviation (20) qui est conçue pour coupler dans le support plat (12) de la lumière (100') qui est émise par la source de lumière (30) et la réfléchir sur un objet (40) dans un environnement du dispositif de capture (10) ;
- le support plat (12) étant configuré pour transmettre la lumière réfléchie couplée (100') par réflexion interne de la zone de couplage (16) à la zone de découplage (18) ;
- la zone de découplage (18) étant mise en oeuvre sous la forme d'un élément holographique (14) avec une deuxième structure de déviation (22) qui est conçue pour découpler du support plat (12) la lumière réfléchie transmise (100') qui est incidente sur la deuxième structure de déviation (22) ;
- le au moins un dispositif de capteur (11) étant un dispositif de caméra à temps de vol qui est configuré pour capturer la lumière (100') découplée dans la zone de découplage (18) et pour fournir des données de capteur corrélées avec la lumière (100') capturée, lesquelles données de capteur décrivent une durée de propagation de la lumière (100') émise par la source de lumière (30) et réfléchie sur l'objet (40) ; et
- le dispositif d'évaluation (32) étant configuré pour fournir des données d'objet en tenant compte des données de capteur, lesquelles données d'objet décrivent une position relative de l'objet (40) par rapport à un point de référence prédéterminé ;
**caractérisé en ce que**
le dispositif de capture (10) comprend au moins deux dispositifs de capteur (11) spatialement séparés l'un de l'autre respectivement et le dispositif d'évaluation (32) est conçu pour établir, au moyen des données de capteur des au moins deux dispositifs de capteur (11), des coordonnées (43) de l'objet (40) sur le dispositif de capture (10) et pour les fournir en tant que données d'objet.

2. Dispositif de capture (10) selon la revendication précédente, dans lequel la zone de couplage (16) et la zone de découplage (18) comportent au moins un réseau optique, en particulier un réseau holographique volumique ou un réseau holographique surfacique, en tant que structure de déviation (20, 22) respective.

3. Dispositif de capture (10) selon l'une des revendications précédentes, dans lequel une zone de couplage de lumière (17) et une zone de découplage de lumière (19) sont fournies sur le support (12),
- la zone de couplage de lumière (17) étant mise en oeuvre sous la forme d'un élément holographique (14) avec une troisième structure de déviation (24) qui est conçue pour coupler dans le support plat (12) de la lumière (100) qui est incidente sur la troisième structure de déviation (24) et provient de la source de lumière (30) du dispositif de capture (10) ;
- le support plat (12) étant configuré pour transmettre la lumière couplée (100) par réflexion interne de la zone de couplage de lumière (17) à la zone de découplage de lumière (19) ; et
- la zone de découplage de lumière (19) étant mise en oeuvre sous la forme d'un élément holographique (14) avec une quatrième structure de déviation (26) qui est conçue pour découpler la lumière transmise (100) qui est incidente sur la quatrième structure de déviation (26) et pour l'émettre dans l'environnement en direction de l'objet (40).

4. Dispositif de capture (10) selon l'une des revendications précédentes,
dans lequel les données d'objet fournies indiquent une distance (42) de l'objet (40) par rapport au dispositif de capture (10).

5. Dispositif de capture (10) selon l'une des revendications précédentes, dans lequel le dispositif de capture (10) comprend au moins trois dispositifs de capteur (11) spatialement séparés les uns des autres respectivement et le dispositif d'évaluation (32) est conçu pour établir, au moyen des données de capteur des au moins trois dispositifs de capteur (11), un agencement spatial de l'objet (40) dans l'environnement par rapport au dispositif de capture (10) et pour les fournir en tant que données d'objet.

6. Dispositif de capture (10) selon l'une des revendications précédentes, dans lequel la zone de couplage (16) et la zone de découplage (18) sont formées d'un seul tenant avec le support plat (12), ou le support plat (12) est formé comme un élément séparé de la zone de couplage (16) et de la zone de découplage (18).

7. Dispositif de capture (10) selon l'une des revendications précédentes, dans lequel la source de lumière (30) est configurée pour émettre de la lumière pulsée (100).

8. Dispositif de capture (10) selon l'une des revendications précédentes, dans lequel le dispositif de capture (10) comprend un dispositif d'acquisition d'image qui est configuré pour capturer de la lumière (100') découplée de la zone de découplage (18) et pour la fournir sous forme de données d'image qui établissent une corrélation avec la lumière (100') capturée.

9. Dispositif de capture (10) selon la revendication précédente, dans lequel le dispositif d'évaluation (32) est configuré pour évaluer les données d'image en tenant compte des données d'objet et d'un critère d'interprétation prédéfini, et pour fournir un signal d'interprétation décrivant les données d'image interprétées.
